# FASCICULE DE BREVET EUROPEEN

(11) **EP 0 970 867 B1**
(45) Date de publication et mention de la délivrance du brevet: **25.02.2004**
(21) Numéro de dépôt: 99420150.7
(22) Date de dépôt: 02.07.1999
(51) Int. Cl.: B61F 5/52, B61F 3/08

(54) **Bogie en matériau composite pour véhicule ferroviaire et procédé de fabrication de tel bogie**
Drehgestell aus Verbundmaterial für ein Schienenfahrzeug und Herstellungsverfahren für solch ein Drehgestell
Bogie made of composite material for a railway vehicle and method of manufacturing of such a bogie

(30) Priorité: 06.07.1998 FR 9808621
(43) Date de publication de la demande: 12.01.2000
(73) Titulaire: ALSTOM Holdings, 75116 Paris (FR)
(72) Inventeur: Landrot, Alain, 71200 Le Creusot (FR)
(74) Mandataire: Myon, Gérard Jean-Pierre

(56) Documents cités:
- EP-A- 0 568 044
- US-A- 4 773 334

## Description

L'invention a trait à un bogie pour véhicule ferroviaire et à un procédé de fabrication d'un tel bogie.

Il est connu de réaliser un bogie de véhicule ferroviaire sous forme de pièces massives en acier ou de structures mécano-soudées. Ces pièces massives et ces structures mécano-soudées sont rigides et lourdes. Elles doivent, en particulier, être équipées de systèmes de suspension et d'amortissement des vibrations.

Par la demande de brevet européen 0 031 008, on connaît un bogie de véhicule ferroviaire comprennent des traverses en forme de H réalisées en matériau composite. Ces traverses ne permettent pas le montage d'éléments accessoires ou de sécurité tels qu'un moteur, un système de freinage ou un système de contrôle.

Dans le cas d'un bogie en matériau composite, pour la fixation des sous-ensembles énumérés ci-dessus, dénommés de façon générique "éléments fonctionnels" du bogie, on peut envisager d'utiliser des inserts métalliques fixés par rapport au bogie cf. US-A-4,773,334. Ces inserts doivent être positionnés dans le bogie en fonction de son utilisation future et des éléments fonctionnels qu'il doit supporter. En d'autres termes, aucune adaptation du bogie aux éléments fonctionnels qu'il supporte ne peut être envisagée après mise en place de ces inserts. Ceci résulte dans une gestion complexe du processus de conception et de fabrication des bogies dont la structure est, dès le début de leur fabrication, figée en ce qui concerne la fixation ultérieure d'éléments fonctionnels. Ce manque de modularité est préjudiciable sur le plan économique, mais également sur le plan technique, car il nuit à l'interchangeabilité des structures des bogies.

C'est à ces inconvénients qu'entend remédier l'invention en proposant un bogie en matériau composite et un procédé de fabrication d'un tel bogie qui permettent d'atteindre une modularité satisfaisante pour la fixation des éléments fonctionnels des bogies.

Dans cet esprit, l'invention concerne un bogie en matériau composite pour véhicule ferroviaire, comprenant les caractéristiques de la revendication 1.

Grâce à l'invention, la fixation des éléments fonctionnels du bogie peut avoir lieu en différents endroits, ce qui permet d'utiliser le caractère modulaire du bogie en adaptant la configuration de ces éléments fonctionnels lors de la conception et du montage final du bogie, voire lors de l'ajout ultérieur d'un élément fonctionnel. L'invention permet également de réduire le temps de développement d'un nouveau bogie, en ce qui concerne le positionnement des éléments fonctionnels, alors que cet aspect prend généralement un temps important compte tenu de l'encombrement de ces éléments.

Selon un premier aspect avantageux de l'invention, le support est formé par un rail creux à l'intérieur duquel est apte à se déplacer au moins un organe de retenue pourvu d'au moins un moyen de coopération avec un organe de fixation et/ou de support d'un élément fonctionnel du bogie. Cet organe de retenue peut être constitué par un coulisseau pourvu d'au moins un taraudage de réception d'une vis de blocage. Le déplacement du coulisseau à l'intérieur du rail autorise un ajustement fin de la position d'un élément fonctionnel, alors que Le serrage d'une vis de fixation dans le taraudage du coulisseau a pour effet d'immobiliser ce coulisseau par rapport au rail. Lorsque plusieurs éléments fonctionnels sont prévus, il suffit de loger plusieurs coulisseaux dans le rail.

Selon un autre aspect avantageux de l'invention, le support est formé d'un rail métallique à section en C ou en double C. Cette géométrie du rail permet de définir un volume à l'intérieur duquel peut être disposé un coulisseau. Avantageusement, le rail comprend deux ailes pourvues d'un bord libre aplati sur lequel peut se déplacer en appui le coulisseau.

Selon un autre aspect avantageux de l'invention, le bogie comprend un châssis s'étendant transversalement par rapport à la direction d'avance normale du véhicule et dans lequel est immobilisé le support rigide allongé. Dans ce cas, on peut prévoir que le châssis est de forme globalement parallélépipédique et pourvu d'un évidement définissant deux poutres qui s'étendent, également perpendiculairement à cette direction d'avance et sont munies chacune d'au moins un support rigide allongé. Ces deux poutres peuvent ainsi servir à la fixation des éléments fonctionnels des bogies.

L'invention concerne également un procédé de fabrication d'un bogie tel que précédemment décrit et, plus spécifiquement, un procédé qui consiste à disposer, dans un moule de fabrication du bogie avant moulage de ce bogie, un support rigide allongé apte à recevoir de façon amovible, en plusieurs emplacements répartis sur sa longueur, des moyens de fixation d'éléments fonctionnels du bogie. Grâce au procédé de l'invention, le support rigide allongé est intégré au bogie dès le début de sa fabrication, alors qu'il peut être immobilisé par rapport à celui-ci par tout moyen approprié et, notamment, par surmoulage, par vissage ou collage.

L'invention sera mieux comprise et d'autres avantages de celle-ci apparaîtront plus clairement à la lumière de la description qui va suivre d'un mode de réalisation d'un bogie de véhicule ferroviaire conforme à son principe, donnée uniquement à titre d'exemple et faite en référence aux dessins annexés dans lesquels :
- la figure 1 est une vue de côté d'un bogie de véhicule ferroviaire conforme à l'invention ;
- la figure 2 est une coupe selon la ligne II-II à la figure 2 ;
- la figure 3 est une représentation schématique de principe, en perspective éclatée, de certains éléments de structure du bogie des figures 1 et 2 ;
- la figure 4 est une section selon la ligne IV-IV à la figure 3 et
- la figure 5 est une section selon la ligne V-V à la figure 3.

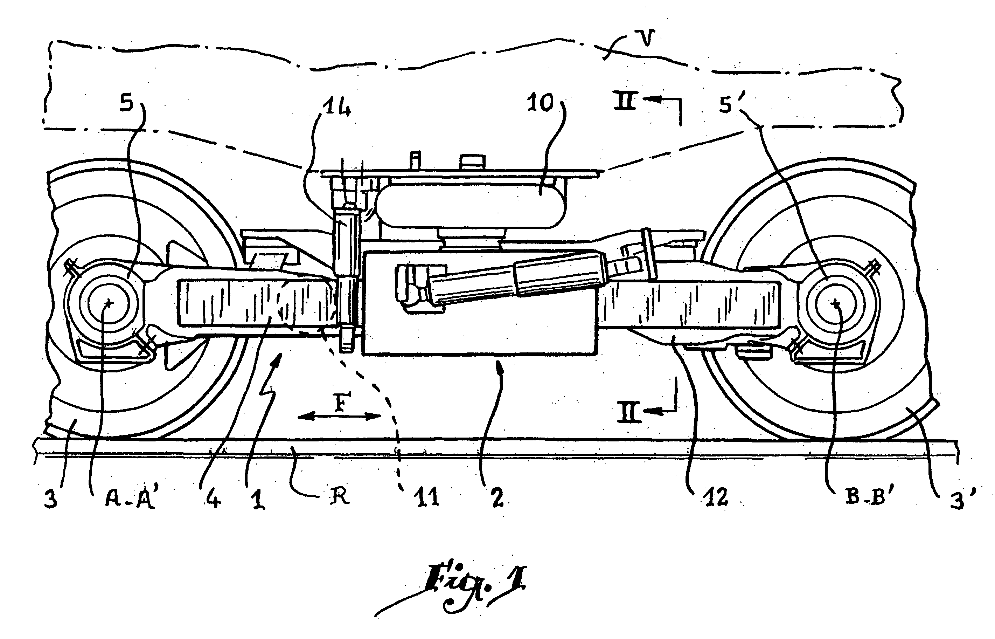

Le bogie 1 représenté à la figure 1 est destiné à supporter un véhicule ferroviaire V, représenté en traits mixtes, en appui sur des rails dont un seul est visible à la figure 1 avec la référence R. Ce bogie 1 est supporté par deux trains de roues 3 et 3' regroupées sur des essieux représentés par des axes A-A' et B-B' de rotation des roues. Des longerons 4 et 4' sont prévus pour supporter le châssis 2 en appui sur des boîtes à essieu 5 et 5' des roues 3 et 3'.

Le châssis 2 et les longerons 4 et 4' sont réalisés en matériau composite, de préférence à base de résine époxydique ou phénolique chargée en fibres de verre, de carbone d'aramide ou équivalent. Ainsi, le bogie est sensiblement plus léger que des bogies classiques en acier, alors qu'il présente d'excellentes propriétés mécaniques et que son prix de revient peut être relativement bas.

Des éléments de suspension secondaire 10 sont prévus pour être intercalés entre le châssis 2 et la caisse du véhicule V. Un moteur d'entraînement 11 et un système de freinage 12 sont également supportés par le châssis 2. Des amortisseurs 14 sont intercalés entre des parties en mouvement du bogie 1. Des bielles 15 sont articulées sur le châssis 2 alors que des butées 16 sont disposées autour d'un pivot d'entraînement 17 pour en limiter la course transversale. Les éléments 10 à 17 constituent des éléments fonctionnels du bogie 1.

En fonction du type de bogie, porteur ou moteur, des équipements spécifiques à ce type de bogie et des équipements optionnels du véhicule V, les éléments fonctionnels 10 à 17 ou équivalents peuvent être de taille et de forme variables, ce qui influe sur leur implantation par rapport au châssis 2.

Pour permettre cette implantation et conformément à l'invention, le châssis 2 est équipé de rails ou glissières métalliques 20 le long desquels peuvent être fixés, les éléments 10 à 17. D'autres éléments connexes au fonctionnement du bogie peuvent également être fixés sur les rails 20.

Ces rails 20 sont prévus pour être intégrés à la structure du châssis 2, plus précisément à l'intérieur de deux poutres 2a et 2b de ce châssis qui s'étendent globalement perpendiculairement à la direction d'avance du véhicule V sur les rails R, représentée par la flèche F à la figure 1.

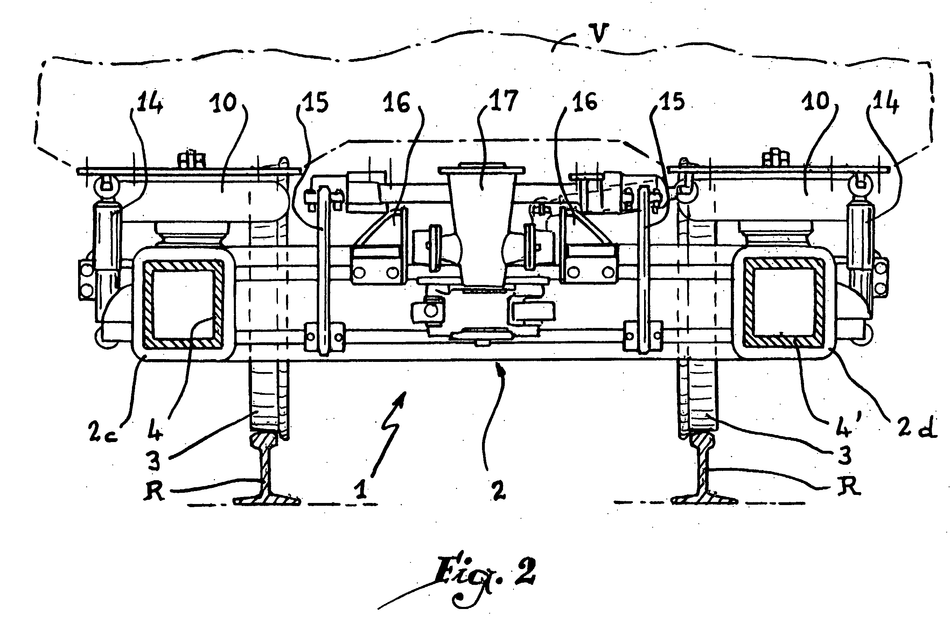

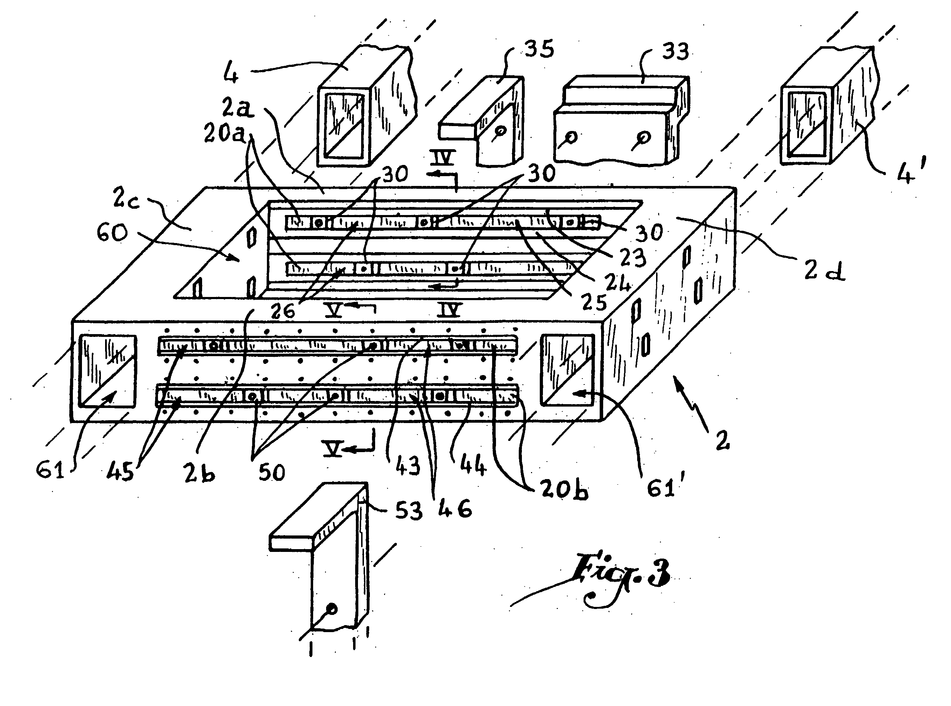

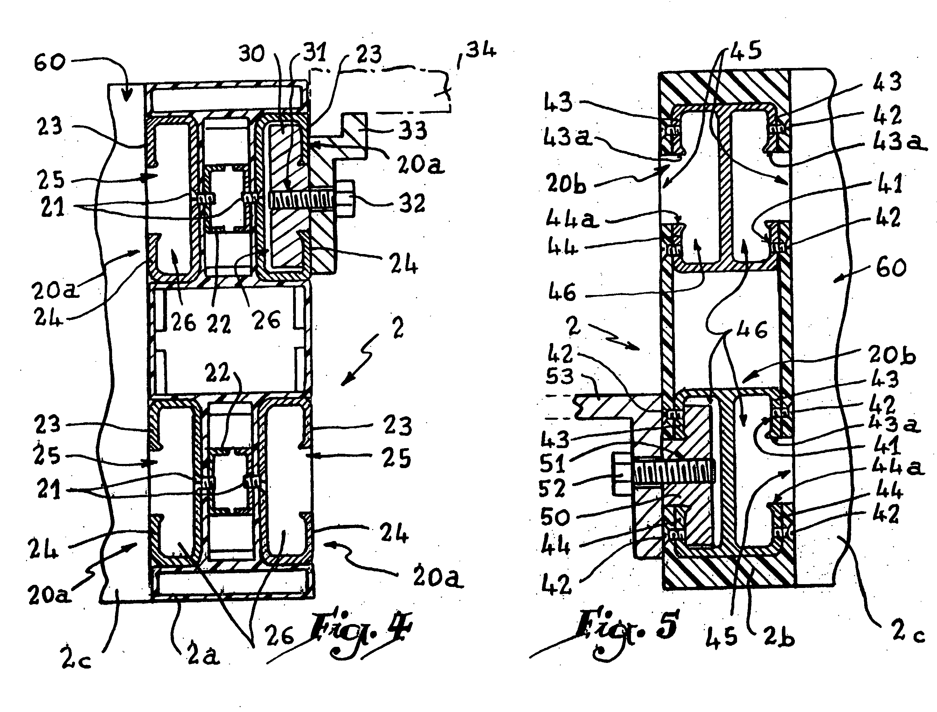

Les rails 20a fixés dans la poutre 2a sont visibles en coupe à la figure 4. Il s'agit de quatre rails de section globalement en forme de C qui sont prévus pour être immobilisés par rapport à la poutre 2a grâce à des vis de blocage 21. Des inserts métalliques 22 sont répartis dans la longueur de la poutre 2a pour recevoir les vis 21 et permettre ainsi une immobilisation ferme des rails 20a par rapport à la poutre 2a.

La section des rails 20a est telle qu'ils présentent deux ailes 23 et 24 exposées sur les faces latérales de la poutre 2a et définissant entre elles une ouverture 25.

Plusieurs coulisseaux 30 sont disposés dans le volume intérieur 26 du rail 20a de façon à pouvoir se déplacer en translation le long de ce rail. Chaque coulisseau 30 est pourvu d'un taraudage central 31 placé à hauteur de l'ouverture 25 de façon à recevoir une vis de fixation 32 dont le serrage dans le taraudage 31 permet d'immobiliser un support 33 conformé pour coincer, contre une aile 23 du rail 20a, un étrier 34 du moteur 11. Le positionnement du moteur 11 par rapport à la poutre 2a a lieu en déplaçant le ou les coulisseaux de fixation de la patte 33 sur la longueur du rail 20a. Ainsi, le moteur 11 peut-il être fixé en différents emplacements le long du rail 20a.

De la même manière, une potence de frein 35 visible à la figure 3 peut être montée sur les rails 20a en différentes positions, en fonction de l'emplacement d'un coulisseau 30, sur la longueur des ailes 23 et 24. On comprend que le positionnement du support 33 et de la potence 35 peut être ajusté en fonction de l'encombrement des éléments qu'ils supportent.

Le système de rails utilisé dans la poutre 2b est partiellement visible à la figure 5. Le rail 20b de cette partie du châssis a une section en forme de double C et est disposé sensiblement complètement à l'intérieur de la poutre 2b, alors que ses ailes 43 et 44 sont pourvues de taraudages 41 de réception de vis de blocage 42. Les ailes 43 et 44 du rail 20b comprennent cependant un bord libre aplati 43a ou 44a destiné à venir en recouvrement des parties de la poutre 2b dans lesquelles sont insérées les vis 42. On note 45 l'ouverture du volume intérieur 46 du rail 20b définie entre les bords 43a et 44a.

Plusieurs coulisseaux 50 sont disposés dans le volume intérieur 46 du rail 20b de façon à pouvoir se déplacer à l'intérieur de ce volume intérieur en appui sur l'un des bords libres 43a et 44a. Chaque coulisseau 50 est pourvu d'un taraudage central 51 destiné à recevoir une vis de fixation 52, dont le serrage permet d'immobiliser une patte 53.

On comprend que plusieurs coulisseaux taraudés 50 peuvent être introduits dans chaque rail 20b, de sorte que plusieurs moyens de fixation tels que des vis de blocage des structures 33 ou 53 peuvent être positionnés en plusieurs emplacements sur la longueur de la poutre 2b. En fait, chaque élément 33 ou 53 peut être positionné en un nombre infini d'emplacements sur la longueur du rail 20b grâce au déplacement continu du coulisseau 50.

On comprend également que, lorsqu'il n'est pas nécessaire de prévoir un élément support 33, 53 ou équivalent, aucun organe ne fait saillie à l'extérieur des poutres 2a et 2b, même si les rails 20b comprennent des coulisseaux 30 ou 50.

Comme il ressort clairement de la figure 3, le châssis 2 est de forme globalement parallélépipédique et comprend un évidement central 60 dont les deux poutres 2a et 2b constituent deux bordures. Les deux autres bordures de l'évidement 60 sont constituées par deux poutres creuses 2c et 2d raccordées aux poutres 2a et 2b par la continuité du matériau composite formant le châssis 2.

Les volumes intérieurs respectifs 61 et 61' des poutres creuses 2c et 2d constituent des logements de réception des longerons 4 et 4'. Ces logements 61 et 61' peuvent être traversés de part en part par les longerons 4 et 4' pour relier les boîtes à essieu 5 et 5'.

Le procédé de fabrication d'un bogie tel que précédemment décrit consiste essentiellement à prévoir d'intégrer les rails 20 dans le châssis 2 dès sa phase de moulage. Pour ce faire, on dispose dans le moule du châssis un ou plusieurs rails selon la configuration retenue. Selon les variantes du procédé de moulage, on peut prévoir de surmouler les rails dans le châssis ou de les immobiliser par rapport au châssis par collage ou par vissage comme décrit en référence aux figures 3 et 4.

Le châssis 2 a été décrit avec deux types de rails. Il est bien évident qu'il peut ne comprendre qu'un type de rails, tel que représenté à la figure 3 ou tel que représenté à la figure 4, ou au contraire, plus de deux types de rails.

## Revendications

1. Bogie en matériau composite pour véhicule ferroviaire (V) comprenant des inserts solidaires du bogie pour la fixation d'éléments fonctionnels du bogie, **caractérisé en ce que** ces inserts sont constitués d'au moins un support rigide allongé (20) immobilisé dans une structure (2) en matériau composite du bogie, ledit support (20) recevant, de façon amovible, en plusieurs emplacements répartis sur sa longueur, des moyens (30-35 ; 50-53) de fixation d'éléments fonctionnels (10-17) dudit bogie.

2. Bogie selon la revendication 1, **caractérisé en ce que** ledit support (20) est formé par un rail creux (20a, 20b) à l'intérieur (26 ; 46) duquel est apte à se déplacer au moins un organe de retenue (30 ; 50) pourvu d'au moins un moyen (31; 51) de coopération avec un organe (32-35 ; 52-53) de fixation et/ou de support d'un élément fonctionnel (10-17) dudit bogie.

3. Bogie selon la revendication 2, **caractérisé en ce que** ledit organe de retenue est un coulisseau (30 ; 50) pourvu d'au moins un taraudage (31 ; 51) de réception d'une vis de blocage (32 ; 52).

4. Bogie selon l'une des revendications précédentes, **caractérisé en ce que** ledit support (20) est formé d'un rail métallique à section en C (20a) ou en double C (20b).

5. Bogie selon les revendications 3 et 4, **caractérisé en ce que** ledit rail (20b) comprend deux ailes (43, 44) pourvues d'un bord libre aplati (43a, 44a) sur lequel peut se déplacer en appui ledit coulisseau (50).

6. Bogie selon l'une des revendications précédentes, **caractérisé en ce qu'**il comprend un châssis (2) s'étendant transversalement par rapport à la direction d'avance normale (F) du véhicule (V) et dans lequel est immobilisé ledit support rigide allongé (20).

7. Bogie selon la revendication 6, **caractérisé en ce que** ledit châssis (2) est de forme globalement parallélépipédique et pourvu d'un évidement (60) définissant deux poutres (2a, 2b) s'étendant transversalement par rapport à la direction d'avance normale (F) du véhicule (V) et munies chacune d'au moins un support rigide allongé (20).

8. Procédé de fabrication d'un bogie en matériau composite pour un véhicule ferroviaire (V), **caractérisé en ce qu'**il consiste à disposer, dans un moule de fabrication dudit bogie (1), avant moulage du bogie, un support rigide allongé (20) apte à recevoir, de façon amovible, en différents emplacements répartis sur sa longueur, des moyens (30-35 ; 50-53) de fixation d'éléments fonctionnels (10-17) dudit bogie.

9. Procédé selon la revendication 8, **caractérisé en ce qu'**il consiste à surmouler ledit support (20) avec le matériau composite dudit bogie (1).

10. Procédé selon la revendication 8, **caractérisé en ce qu'**il consiste à immobiliser ledit support (20), par rapport à une partie (2) dudit bogie réalisée en matériau composite, par vissage (21 ; 41) ou collage.

## Claims

1. Bogie made of composite material for a railway vehicle (V), comprising inserts integral with the bogie for fixing functional elements of the bogie, **characterised in that** these inserts consist of at least one elongated rigid support (20) fixed in position in a structure (2), made of composite material, of the bogie, the said support (20) accommodating, in a replaceable manner, means (30-35; 50-53) for fixing functional elements (10-17) of the said bogie in several locations distributed over its length.

2. Bogie according to Claim 1, **characterised in that** the said support (20) is formed by a hollow rail (20a, 20b) inside (26; 46) which at least one retaining member (30; 50) provided with at least one means (31; 51) for interaction with a fixing and/or support member (32-35; 52-53) for a functional element (10-17) of the said bogie is able to move.

3. Bogie according to Claim 2, **characterised in that** the said retaining member is a sliding block (30; 50) provided with at least one internal screw thread (31; 51) for accommodating a locking screw (32; 52).

4. Bogie according to one of the preceding claims, **characterised in that** the said support (20) is formed by a metallic rail with a C-shaped (20a) or double C-shaped (20b) cross-section.

5. Bogie according to Claims 3 and 4, **characterised in that** the said rail (20b) comprises two wings (43, 44) provided with a flattened free edge (43a, 44a) on which the said sliding block (50) is able to move in bearing contact.

6. Bogie according to one of the preceding claims, **characterised in that** it comprises a chassis (2) which extends transversely with respect to the normal direction of forward movement (F) of the vehicle (V) and in which the said elongated rigid support (20) is fixed in position.

7. Bogie according to Claim 6, **characterised in that** the said chassis (2) is of parallelepiped shape on the whole and provided with a hollow (60) defining two beams (2a, 2b) which likewise extend transversely with respect to the normal direction of forward movement (F) of the vehicle (V) and are each equipped with at least one elongated rigid support (20).

8. Method of manufacture for a bogie made of composite material for a railway vehicle (V), **characterised in that** it consists in arranging an elongated rigid support (20) capable of accommodating in a replaceable manner, at various locations distributed over its length, fixing means (30-35; 50-53) for functional elements (10-17) of the said bogie (1) in a mould for manufacture of the said bogie before moulding the bogie.

9. Method according to Claim 8, **characterised in that** it consists in duplicate moulding the said support (20) with the composite material of the said bogie (1).

10. Method according to Claim 8, **characterised in that** it consists in fixing the said support (20) in position with respect to a part (2) of the said bogie made of composite material, by screwing (21; 41) or adhesive bonding.

## Patentansprüche

1. Drehgestell aus Verbundmaterial für ein Schienenfahrzeug (V), umfassend mit dem Drehgestell zusammenhängende Einsätze zur Befestigung von funktionellen Elementen des Drehgestells, **dadurch gekennzeichnet, dass** diese Einsätze aus mindestens einer starren länglichen Halterung (20) bestehen, die in einer Struktur (2) aus Verbundmaterial des Drehgestells festgemacht ist, wobei die Halterung (20) an mehreren über ihre Länge verteilten Stellen in abnehmbarer Weise Mittel (30-35; 50-53) zum Befestigen von funktionellen Elementen (10-17) des Drehgestells aufnimmt.

2. Drehgestell gemäß Anspruch 1, **dadurch gekennzeichnet, dass** die Halterung (20) aus einer hohlen Schiene (20a, 20b) gebildet wird, in deren Innerem (26; 46) mindestens eine Übertragungsvorrichtung (30; 50) verschiebbar ist, die mit mindestens einem Mittel (31; 51) zum Zusammenwirken mit einer Vorrichtung (32-35; 52-53) zur Befestigung und/oder zur Lagerung eines funktionellen Elementes (10-17) des Drehgestells versehen ist.

3. Drehgestell gemäß Anspruch 2, **dadurch gekennzeichnet, dass** die Übertragungsvorrichtung ein Gleitstück (30; 50), versehen mit mindestens einem Innengewinde (31;5 1) zum Aufnehmen einer Feststellschraube (32: 52) ist.

4. Drehgestell gemäß einem der vorhergehenden Ansprüche, **dadurch gekennzeichnet, dass** die Halterung (20) aus einer Metallschiene mit einem Querschnitt in Form eines C (20a) oder eines doppelten C (20b) gebildet ist.

5. Drehgestell gemäß den Ansprüchen 3 und 4, **dadurch gekennzeichnet, dass** die Schiene (20b) zwei Flügel (43, 44) umfasst, die mit einer abgeflachten freien Kante (43a, 44a) versehen sind, auf der sich das Gleitstück (50) im Auflager verschieben kann.

6. Drehgestell gemäß einem der vorhergehenden Ansprüche, **dadurch gekennzeichnet, dass** es ein Fahrgestell (2) umfasst, das sich quer zur normalen Fahrtrichtung (F) des Fahrzeugs (V) erstreckt, und in dem die längliche starre Halterung (20) festgemacht ist.

7. Drehgestell gemäß Anspruch 6, **dadurch gekennzeichnet, dass** das Fahrgestell (2) im Ganzen quaderförmig und mit einer Aussparung (60) versehen ist, die zwei Träger (2a, 2b) definiert, die sich quer zur normalen Fahrtrichtung (F) des Fahrzeugs (V) erstrecken und die jeder mit mindestens einer starren länglichen Halterung (20) versehen sind.

8. Verfahren zur Herstellung eines Drehgestells aus Verbundmaterial für ein Schienenfahrzeug (V), **dadurch gekennzeichnet, dass** es daraus besteht, in einer Form zum Herstellen des Drehgestells (1) vor dem Formen des Drehgestells eine starre längliche Halterung (20) anzuordnen, die dazu geeignet ist, an mehreren über ihre Länge verteilten Stellen in abnehmbarer Weise Mittel (30-35; 50-53) zum Befestigen von funktionellen Elementen (10-17) des Drehgestells aufzunehmen.

9. Verfahren gemäß Anspruch 8, **dadurch gekennzeichnet, dass** es daraus besteht, die Halterung (20) mit dem Verbundmaterial des Drehgestells (1) zu überformen.

10. Verfahren gemäß Anspruch 8, **dadurch gekennzeichnet, dass** es daraus besteht, die Halterung (20) in Bezug auf einen aus Verbundmaterial ausgeführten Teil (2) des Drehgestells mittels Verschrauben (21; 41) oder Verkleben festzumachen.
